# EUROPEAN PATENT APPLICATION

(11) **EP 4 737 214 A1**
(43) Date of publication of application: **06.05.2026**
(21) Application number: 24209753.3
(22) Date of filing: 30.10.2024
(51) Int. Cl.: B60Q 1/14, F21W 102/14, F21W 102/15, F21W 102/145

(54) **IMPROVED GLARE FREE HIGH BEAM FUNCTION IN A VEHICLE**

(71) Applicant: Valeo Vision, 93012 Bobigny Cedex (FR)
(72) Inventor: LUBAT, Arthur, 93012 BOBIGNY CEDEX (FR); DREZET, Matthieu, 93012 BOBIGNY CEDEX (FR)
(74) Representative: Valeo Visibility

(57) **Abstract**

The invention provides method of controlling a lighting module to project a pixelated beam, the vehicle comprising a control module performing a glare free high beam function. The method comprises, for each border of a shadow tunnel positioned at an initial border position :
- obtaining (602) a target border position for the border of the shadow tunnel;
- controlling (605-607) the light source to move the border from the initial border position to the target border position.

If an update direction is a tunnel reducing direction, controlling the light source comprises:
- moving (606) the border to an intermediate border position being determined based on a current time period and on a current border speed that depends on a distance between a current border position and the target border position;
- if the intermediate border position differs from the target border position, repeating (607) the previous step.

## Description

This invention is related to the field of automotive lighting devices, and more particularly, to the control thereof.

Automotive luminous devices comprise light sources, so that the lighting modules mounted in headlamps of a vehicle may provide some light, either for lighting and/or signalling. Several types of light sources families are used nowadays, all of them having advantages and disadvantages.

It is nowadays known to use light sources that comprises a plurality of individually controlled light elements, such as Light Emitting Diodes, LEDs. Such a light source may be mounted in a lighting module of a vehicle, and may be controlled by a driver unit so as to perform at least one lighting function, based on control signals received from a body controller of the vehicle.

The plurality of light elements of the light source may be arranged in a matrix comprising several lines and several columns, or may be arranged in one line.

The lighting module may further comprise an optic system that is arranged to project a beam, that comprise several segments (if several hundreds or thousands of light elements are arranged in one line) or several pixels (if the light elements are arranged in matrix). It is thus possible to produce a pixelated or segmented light beam with which the lighting module is able to perform localized lighting functions, for example project a pattern onto the scene.

The lighting module may perform a glare free high beam function; GFHB, which consists in controlling the segmented or pixelated beams projected by the headlamps of the vehicle to maintain a high beam function while crossing or following other vehicles on the road. To this end, information acquired by a camera may be used to detect the positions of other vehicles in the scene in front of the vehicle performing the GFHB function, and to turn off parts (segments or pixels) of the beams projected by the headlamps to create darkened zones (also known as shadow tunnels) around the positions of the other vehicle, thereby avoiding glaring the other road users.

The GFHB function is dynamic and is constantly adapted to the information acquired by the camera, so that the positions of the other vehicles vary: this requires to update the position of the shadow tunnels, comprising the positions of the borders of the shadow tunnels (the borders between the bright area or areas, and the shadow tunnel).

The position of the GFHB tunnels can be updated, if needed, at a given frequency, or every first time period T1.

In some situations, the positions of the other vehicle evolve quickly in the scene in front of the vehicle, which causes the GFHB function to quickly displace the borders of the shadow tunnel.

This enables to avoid glaring other drivers but may be disturbing for the driver of the vehicle implementing the GFHB function.

To avoid this, Maximum Border Motion Slew rate, MBMS, is a feature of the GFHB function that sets a maximum angular speed per time step for updating a position of the border of the shadow tunnels created by the GFHB function, when the border is moved towards the interior of the shadow tunnel (for example, when the right border of the shadow tunnel is moved to the left direction).

Therefore, when a target tunnel position of the shadow tunnel (defining target border positions of the borders of the shadow tunnel) is different from a current position of the shadow tunnel:
- to move a border from an initial border position to its target border position, if the border is moved towards the exterior (called a tunnel opening direction) of the shadow tunnel (a part of the ignited section of the beam is turned off), then the border is moved to its target border position instantly, without taking into account the maximum angular speed. This enables to avoid glaring the other drivers;
- to move a border from the initial border position to its target border position, if the border is moved towards the interior (called a tunnel reducing direction) of the shadow tunnel (a part of the beam that is in the shadow tunnel is re-ignited), then the border is moved to its target border position, at an angular speed that is less than or equal to the maximum angular speed. Therefore, when the initial border position is remote from its target border position, the border is updated at the maximum angular speed, and may reach the target border position after several time steps, which reduces the disturbance of the user.

However, even when the MBMS feature is activated, when the position of the shadow tunnel is moving fast, if a border is moved in a tunnel reducing direction, it is moved at the maximum angular speed, and then stops abruptly when reaching the target border position : the dynamic of the border goes from the maximum angular speed to 0 degree per second in one time step, which is disturbing for the user.

There is therefore a need to improve the MBMS feature of the GFHB function to reduce the disturbance of the user driving the vehicle implementing the GFHB function, while avoiding glaring the other drivers on the road.

The invention improves the situation.

A first aspect of the invention concerns a method of controlling a lighting module mounted in a vehicle, the lighting module comprising a light source with a plurality of light elements that are separately controllable to project a pixelated or segmented beam in front of the vehicle, the vehicle comprising a control module performing a glare free high beam function that is arranged to control the light source to create at least one shadow tunnel in the pixelated or segmented beam based on a position of at least one other vehicle detected in front of the vehicle. The method comprises, for each border of a shadow tunnel positioned at an initial border position:
- obtaining a target border position for the border of the shadow tunnel;
- controlling the light source to move the border from the initial border position to the target border position. When an update direction going from the initial border position to the target border position is a tunnel reducing direction, controlling the light source to move the border from the initial border position to the target border position the light source comprises:
- moving the border from a current border position to an intermediate border position, towards the target border position, the intermediate border position being determined based on a current time period and based on a current border speed that depends on a distance between the current border position and the target border position;
- when the intermediate border position differs from the target border position, repeating the previous step, at a next time period, the intermediate border position becoming the current border position.

Therefore, the invention allows to define intermediate border positions that depends on the distance between a current border position and the target border position, therefore allowing to decelerate the moving of the border when it approaches the target border position. This allows to avoid disturbing the driver of the vehicle, compared to the prior art in which the border is moved at a constant maximum speed and abruptly stops when it reaches the target border position. In addition, this is performed for a border to be moved in a tunnel closing position to reach the target border position: indeed, in this situation, there is no other vehicle between the initial border position and the target border position, which enables to avoid disturbing the driver of the vehicle, without glaring the other drivers.

According to some embodiments, a predefined increasing function may set correspondences between speed values and possible distances between the current border position and the target border position, and the current border speed may be determined by applying the predefined increasing function to the distance.

This enables to facilitate the determination of the current border speed, and to make the current border speed smaller when the border approaches the target border position.

In complement, the predefined increasing function may be linear in a first predefined range of possible distances between the current border position and the target border position that are comprised between zero and a predefined distance value.

This enables an easy and quick computation of the current border speed.

Alternatively, the predefined increasing function may be a polynomial function in a first predefined range of possible distances between the current border position and the target border position that are comprised between zero and a predefined distance value.

This enables to define with precision the dynamic of the border approaching its target border position.

In complement, the predefined increasing function may be a constant in a second predefined range of possible distances between the current border position and the target border position that are above the predefined distance value.

This enables to cap the border speed, which reduces the disturbance of the driver, and makes the invention compatible with the MBMS feature previously described.

According to some embodiments, if the update direction is a tunnel opening direction, the control module may control the light source to move the border from the initial border position directly to the target border position without any intermediate border position.

This enables to avoid glaring the other drivers by moving the border directly to the target border position, when another vehicle is comprised between the initial border position and the target border position.

According to some embodiments, the steps of obtaining the target border position for the border of the shadow tunnel and of controlling the light source to move the border from the initial border position to the target border position, may be carried out during a first time period T1 of index k, and may be repeated for a next first time period T1 of index k+1. The current time period based on which the intermediate border position is determined, may be a second time period T2, the second time period T2 being shorter than or equal to the first time period T1.

This enables to dynamically update the tunnel position, as the relative positions of the other vehicles on the road vary. The fact that the border speed depends on the distance between the current border position and target border position also enables to filter small and rapid variations of the relative positions of the other vehicles, which may be due to noise in information captured by sensors of the vehicle. The first time period T1 defines the frequency to update the shadow tunnel, whereas the smaller second time period T2 defines the incremental update of the border position between the initial border position and the target border position, within a first time period T1.

In complement, the second time period T2 may be more than N times shorter than the first time period T1, N being an integer greater than or equal to 2.

Therefore, several intermediate border positions can be determined and used to control the light source, before reaching the target border position, within the same first time period T1, which reduces the visual disturbance for the driver.

A second aspect of the invention concerns a computer program comprising instructions arranged for implementing the method according to the first aspect of the invention, when said instructions are executed by a processor.

A third aspect of the invention concerns a control module arranged for controlling at least one lighting module of a vehicle, the lighting module comprising a light source with a plurality of light elements that are separately controllable to project a pixelated or segmented beam in front of the vehicle, the control module being configured for performing a glare free high beam function to create at least one shadow tunnel in the pixelated or segmented beam based on a position of at least one other vehicle detected in front of the vehicle, wherein the control module comprises a processor configured for, for each border of a shadow tunnel positioned at an initial border position:
- obtaining a target border position for the border of the shadow tunnel;
- controlling the light source to move the border from the initial border position to the target border position;
   wherein, when an update direction going from the initial border position to the target border position is a tunnel reducing direction, controlling the light source to move the border from the initial border position to the target border position the light source comprises:
- moving the border from a current border position to an intermediate border position, towards the target border position, the intermediate border position being determined based on a current time period and based on a current border speed that depends on a distance between the current border position and the target border position;
- when the intermediate border position differs from the target border position, repeating the previous step, at a next time period, the intermediate border position becoming the current border position.

A fourth aspect of the invention concerns a system comprising a control module according to the third aspect and a lighting module, the lighting module comprising a light source with a plurality of light elements that are separately controllable to project a pixelated or segmented beam.

According to some embodiments, the lighting module comprises a pixelated electroluminescent light source and the plurality of light elements may be mounted on a common substrate, the lighting module being configured to project a pixelated beam.

Alternatively, the lighting module may be a matrix light module and the plurality of light elements may be mounted on respective substrates, the lighting module being configured to project a segmented beam.

A fifth aspect of the invention concerns a vehicle comprising a pair of lighting modules, and at least one control module according to the third aspect of the invention.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
[Fig. 1] shows a lighting system of a vehicle according to some embodiments of the invention;
[Fig. 2] shows a lighting module of a vehicle according to some embodiments of the invention;
[Fig. 3a] shows an initial shadow tunnel in a light beam, controlled by a glare free high beam function of a lighting system, according to some embodiments of the invention, in a first situation;
[Fig. 3b] shows a target shadow tunnel in a light beam, controlled by a glare free high beam function of a lighting system, according to some embodiments of the invention, in the first situation;
[Fig. 4a] shows an initial shadow tunnel in a light beam, controlled by a glare free high beam function of a lighting system, according to some embodiments of the invention, in a second situation;
[Fig. 4b] shows a target shadow tunnel in a light beam, controlled by a glare free high beam function of a lighting system, according to some embodiments of the invention, in the second situation;
[Fig. 5a] shows an initial shadow tunnel in a light beam, controlled by a glare free high beam function of a lighting system, according to some embodiments of the invention, in a third situation;
[Fig. 5b] shows a target shadow tunnel in a light beam, controlled by a glare free high beam function of a lighting system, according to some embodiments of the invention, in the third situation;
[Fig. 6] is a flowchart showing the steps of a method according to some embodiments of the invention;
[Fig. 7] is a predefined increasing function for determining a current border speed of a border of a shadow tunnel in a light beam, according to some embodiments of the invention;
[Fig. 8a] shows an initial tunnel position and a target tunnel position in a light beam produced by a lighting system according to some embodiments of the invention, in the second situation;
[Fig. 8b] shows an intermediate tunnel position and the target tunnel position in a light beam produced by a lighting system according to some embodiments of the invention, in the second situation;
[Fig. 8c] shows another intermediate tunnel position and the target tunnel position in a light beam produced by a lighting system according to some embodiments of the invention, in the second situation;
[Fig. 8d] shows the target tunnel position in a light beam produced by a lighting system according to some embodiments of the invention, in the second situation;
[Fig. 9] shows the structure of a control module according to some embodiments of the invention.

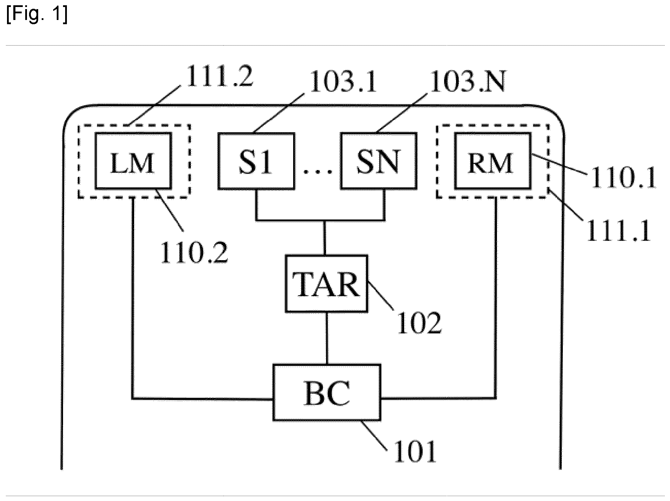

Figure 1 shows a lighting system 10 of a vehicle 100 according to some embodiments of the invention.

The vehicle 100 comprises a right headlamp 111.1 and a left headlamp 111.2. The right headlamp 111.1 comprises at least a lighting module 110.1 and the left headlamp 111.2 comprises at least a lighting module 110.2.

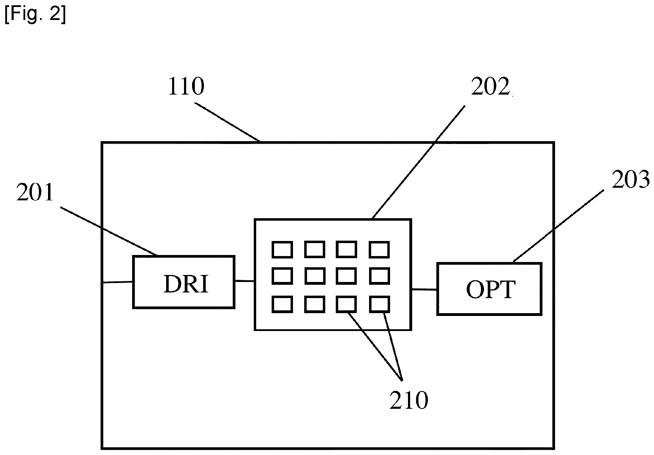

According to the invention, the lighting module 110.1 and the lighting module 110.2 each comprises a light source comprising a plurality of light elements, that can be controlled separately, as explained in what follows with reference to figure 2, to project respective segmented or pixelated beams. The lighting module 110.1 and the lighting module 110.2 are further configured to be controlled by a control module implementing a Glare Free High Beam (GFHB) function when projecting the segmented or pixelated beams.

As previously explained, the GFHB function consists in controlling the segmented or pixelated beams projected by the headlamps 111.1 and 111.2 to maintain a high beam function while crossing or following other vehicles on the road. To this end, information acquired by a camera or other sensors may be used to obtain information to identify and detect the positions of other vehicles in the scene in front of the vehicle performing the GFHB function, and to turn off parts (one or several segments or pixels) of the beams projected by the headlamps to create shadow tunnels around the positions of the other vehicle, thereby avoiding glaring the other road users.

The control module implementing the GFHB function may be a main control module 101 of the vehicle 100, also called body controller 101, or may be a control module 201, also called driver 201, of the light source 202 of a lighting module 110, among the lighting modules 110.1 and 110.2.

To implement the GFHB function, the vehicle further comprises one or several sensors 103.1 - 103.N, N being an integer equal to or greater than 1. In particular the vehicle 100 may comprise a camera, a lidar and/or a radar, arranged to acquire information enabling to identify and locate other vehicles in the scene facing the vehicle 100. The sensors 103.1 - 103.N can be coupled with an analysis module, not shown on the figures and which can be incorporated in the body controller 101, the analysis module being arranged for identifying and locating the other vehicles in the scene facing the vehicle 100, based on the information captured by the sensors. Such an analysis (in particular image processing for analysing images acquired by a camera) are well known and are not further described in the description.

The vehicle may further comprise a target tunnel determination module 102 that is arranged to determine at least one target tunnel position based on the information acquired by the at least one sensor 103.1-103.N and/or the analysis performed by the analysis module.

The target tunnel position comprises:
- a target right border position and a target left border position when the beam projected by the lighting modules 110.1 and 110.2 is a segmented beam;
- a target right border position, a target left border position, a target upper border position and a target lower border position, when the beam projected by the lighting modules 110.1 and 110.2 is a pixelated beam.

In what follows, the example of a pixelated beam is considered, for illustrative purposes only, but focusing on the target right border position and target left border position for simplifying the description.

The target tunnel determination module 102 may be external to the body controller 101 or may be incorporated in the body controller 101.

In order to enable the GFHB function to be dynamically adapted to the information acquired by the at least one sensor 103.1-103.N (the positions of the other vehicles may vary in the scene facing the vehicle 100), the target tunnel determination module 102 updates the at least one target tunnel position at a given first frequency, corresponding to a first time period (or first time step) T1, based on the dynamic information acquired by the at least one sensor 103.1-103.N. Assuming that the GFHB function is activated at t, the at least one target tunnel position is updated at t+T1, t+2*T1, ... t+k*T1, k being an integer.

Figure 2 shows the structure of a lighting module 110, which can correspond to the right lighting module 110.1 and to the left lighting module 110.2, as described with reference to figure 1, according to some embodiments of the invention.

The lighting module 110 comprises a light source 202 with a plurality of light elements 210 that can be individually controlled by a control unit 201, called driver 201. The plurality of light elements 210 can be arranged in one line or in a matrix of several lines. On figure 2, the example of a matrix with 3 lines and 4 columns of light elements 210 is shown, for illustrative purposes. However, no restriction is attached to the number of light elements 210 of the light source 202.

The light source 110 further comprises an optical system 203 comprising at least one optical element, such as a mirror and/or a lens, that is arranged to combine the individual beams emitted from the light elements 210, into a segmented or pixelated beam that is projected ahead of the vehicle 100, through a glass of the headlamp in which the lighting module 110 is mounted.

Preferably, the light source 202 is a high-definition light source that is arranged to project a pixelated beam with more than 100 pixels, and preferably more than 1000 pixels. To this end, the light source 202 may comprise more than a hundred, or more than a thousand of light elements. For example, the light source 202 may comprise between 1000 and 100 000 light elements 210, that can be individually controlled by the driver 201.

In addition, no restriction is attached to the technology associated with the light source 202.

The light elements 210 may be electroluminescent elements, controlled by a voltage applied to the terminals of each electroluminescent element by the driver 201. Each light element 210 or subset of light elements 210 may be mounted on its own substrate, in which case the light module is called a matrix lighting module. Alternatively, the luminous elements 210 are mounted on a common substrate, to form a monolithic light source, the lighting module being configured to project a pixelated beam, in which case it is also called a high definition module.

A monolithic source may comprise a very high density of light elements, which makes it relevant for a large panel of applications. It comprises a plurality of semiconductor electroluminescent elements of submillimeter dimensions grown by epitaxy on the common substrate, the common substrate generally comprising silicon. Contrary to light sources comprising matrix of conventional Light-Emitting Diodes, LEDs, in which every electronic component is mounted on a dedicated substrate such as a Printed Circuit Board, PCB, a monolithic source is to be seen as a unique electronic component, wherein, during manufacturing, several ranges of semiconductor electroluminescent junctions are generated on a common substrate, in the form of a matrix. This production technique allows to manufacture electroluminescent ranges, each range forming an elementary luminous element 210, very near from each other. The gap between the luminous elements 210 can have a submillimeter dimension. An advantage of such production technique is the very high density of pixels that can be produced in the resulting beam, based on a light source with a unique substrate.

Alternatively, the light source may comprise an array of LEDs, each LED being the light element 210 previously described.

Still alternatively, the light source 202 may be a Digital Micromirror Device, DMD, wherein each micromirror forms a light element 210 that can be individually controlled to project or to inhibit a beam towards the optical system 203, to project or to inhibit a pixel or segment in the segmented or pixelated beam projected ahead of the vehicle 100. Each digital micromirror can be controlled by the driver 201. The principle of DMD is well known and is not further described in the present description.

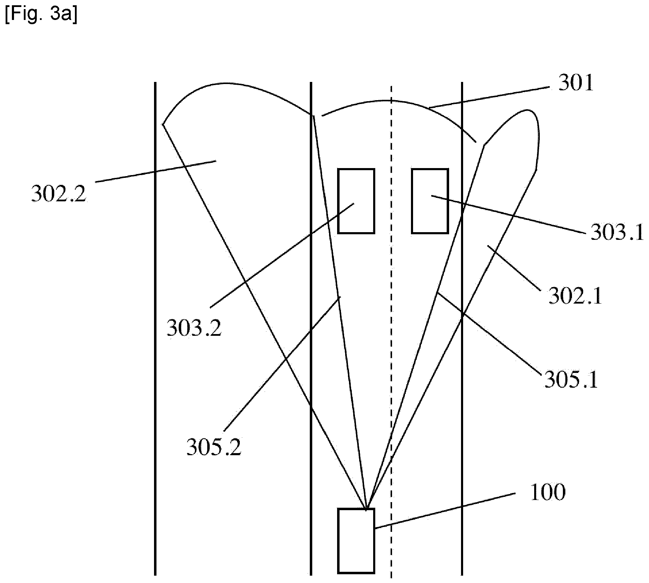

In what follows, figures 3a, 3b, 4a, 4b, 5a, 5b, and 5c shows pixelated or segmented beams comprising a shadow tunnel controlled by the GFHB function, in different driving situations, according to some embodiments of the invention.

Figure 3a shows an initial pixelated or segmented beam 300 projected by headlamps of a vehicle according to some embodiments of the invention, in a first driving situation.

In the first driving situation, two other vehicles 303.1 and 303.2 are initially driving ahead of the vehicle 100, in the same direction. An initial pixelated beam 300 is projected, comprising two lighting zones 302.1 and 302.2, delimitating an initial shadow tunnel 301 in an initial tunnel position defined by an initial right border position 305.1 and by an initial left border position 305.2. As shown on figure 3a, the initial right and left border positions 305.1 and 305.2 may be expressed as angular values.

Because figure 3a shows the vehicles from above, only the horizontal positions of the lighting zones and only the left and right borders of the initial shadow tunnel 301 are made visible. However, when the projected beam 300 is pixelated, the shadow tunnel 301 may further comprise an upper border and a lower border as previously explained. The same applies to the target shadow tunnel 311 described hereafter.

The initial shadow tunnel 301 encompasses the positions of the two other vehicles 303.1 and 303.2, so as to avoid glaring the drivers of these other vehicles 303.1 and 303.2.

The initial shadow tunnel 301 can be projected until the start of a first time period T1 of index k, at the instant t+k*T1 (t referring to the start of the GFHB function).

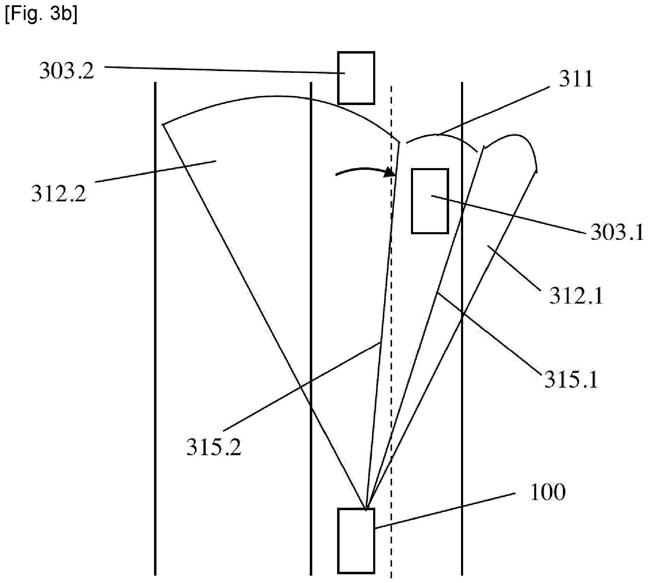

Figure 3b shows a target pixelated or segmented beam 310 projected by headlamps of a vehicle according to some embodiments of the invention, in the first driving situation.

At instant t+k*T1, new information is captured by the at least one sensor 103.1 to 103.N, indicating that the relative position of the other vehicle 303.2 has changed, and that the other vehicle 303.2 is not to be taken into account by the GFHB function. This requires updating the initial beam 300 to the target beam 410, in which the initial shadow tunnel 301 is updated (horizontally reduced) to the target shadow tunnel 311.

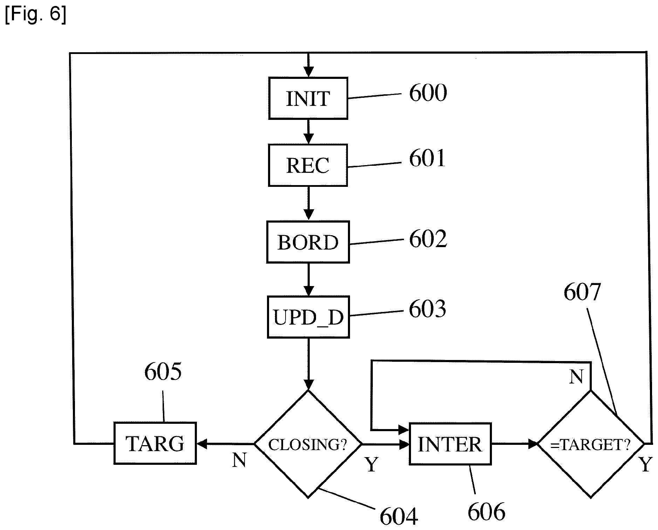

The target shadow tunnel 311 is between a target right lighting zone 312.1 and a target left lighting zone 312.2. The target right lighting zone 312.1 is the same as the initial right lighting zone 302.1. However, the target left lighting zone 312.2 is to be enlarged to the right, compared to the initial left lighting zone 302.2, so as to reduce the width of the target shadow tunnel 311 compared to the initial shadow tunnel 301: to this end, a target left border position 315.2 and a target right border position 315.1 are calculated by the GFHB function and the lighting module 110 is controlled to project the target beam 310, in accordance with the method described with reference to figure 6.

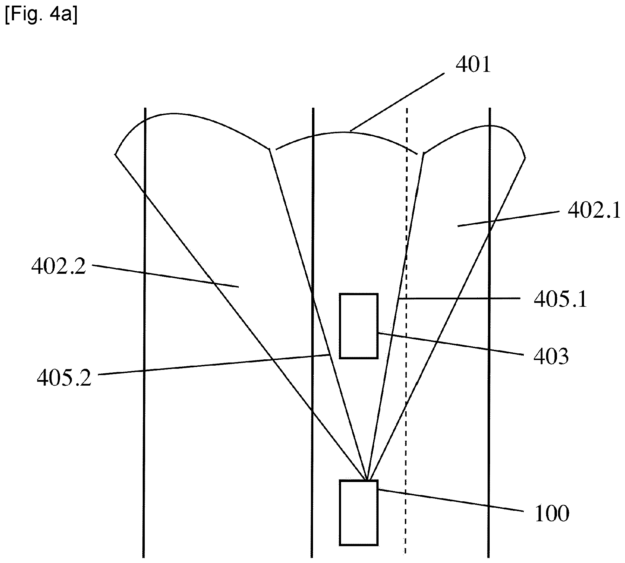

Figure 4a shows an initial pixelated or segmented beam 400 projected by headlamps of a vehicle according to some embodiments of the invention, in a second driving situation.

In the second driving situation, another vehicle 403 is initially driving ahead of the vehicle 100, in the same direction, at a given first distance from the vehicle 100. An initial pixelated beam 400 is projected, comprising two lighting zones 402.1 and 402.2, delimitating an initial shadow tunnel 401 in an initial tunnel position defined by an initial right border position 405.1 and by an initial left border position 405.2. As shown on figure 4a, the initial right and left border positions 405.1 and 405.2 may be expressed as angular values.

As per figure 3a, because figure 4a is shown from above the vehicles, only the horizontal positions of the lighting zones and only the left and right borders of the initial shadow tunnel 401 are made visible. However, when the projected beam 400 is pixelated, the initial shadow tunnel 401 may further comprise an upper border and a lower border. The same applies to the target shadow tunnel 411 described hereafter.

The initial shadow tunnel 401 encompasses the position of the other vehicle 403, so as to avoid glaring the driver of this other vehicle 403.

The initial shadow tunnel 401 can be projected until the start of a first time period T1 of index k, at the instants t+k*T1.

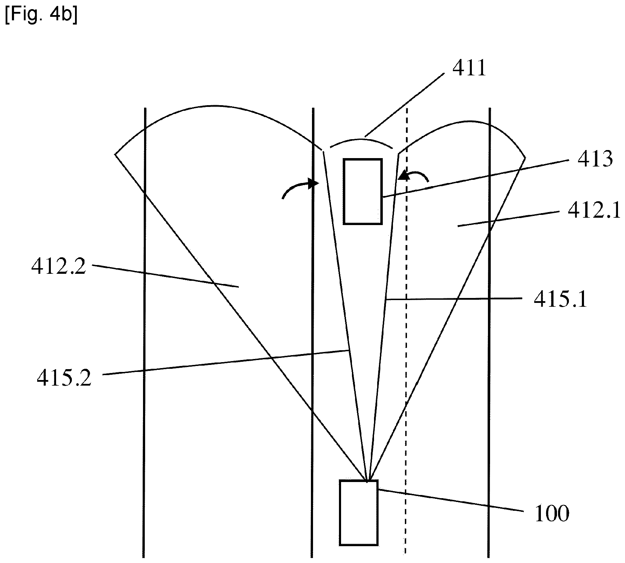

Figure 4b shows a target pixelated or segmented beam 410 projected by headlamps of a vehicle according to some embodiments of the invention, in the second driving situation.

At instant t+k*T1, new information is captured by the at least one sensor 103.1 to 103.N, indicating that the relative position of the other vehicle 403 has changed, as the other vehicle is at a second distance, the second distance being greater than the first distance. This requires updating the initial beam 400 to the target beam 410, in which the initial shadow tunnel 401 is updated (reduced in the horizontal direction) to the target shadow tunnel 411 as shown on figure 4b.

The target shadow tunnel 411 is between a target right lighting zone 412.1 and a target left lighting zone 412.2. The target right lighting zone 412.1 and the target left lighting zone 412.2 are respectively enlarged to the left and to the right, so as to reduce the width of the target shadow tunnel 411 compared to the initial shadow tunnel 401: to this end, a target left border position 415.2 and a target right border position 415.1 are calculated by the GFHB function and the lighting module 110 is controlled to project the target beam 410, in accordance with the method described with reference to figure 6.

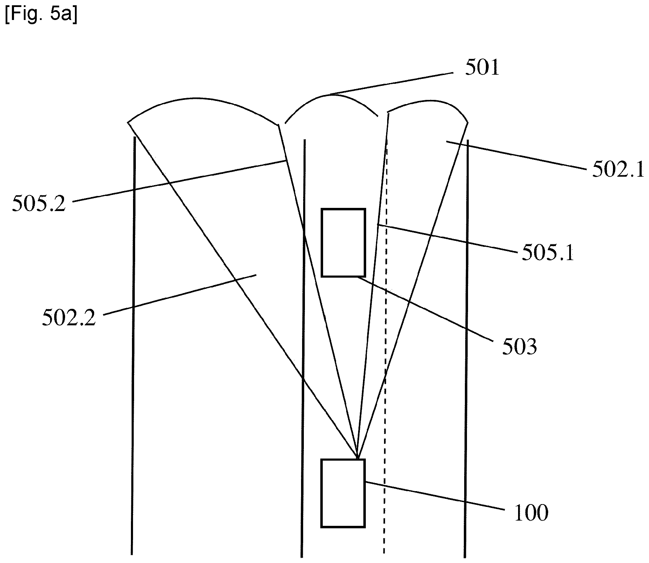

Figure 5a shows an initial pixelated or segmented beam 400 projected by headlamps of a vehicle according to some embodiments of the invention, in a third driving situation.

In the third driving situation, another vehicle 503 is initially driving ahead of the vehicle 100, in the same direction. An initial pixelated beam 500 is projected, comprising two initial lighting zones 502.1 and 502.2, delimitating an initial shadow tunnel 501 in an initial tunnel position defined by an initial right border position 505.1 and by an initial left border position 505.2. As shown on figure 5a, the initial right and left border positions 505.1 and 505.2 may be expressed as angular values.

As per figures 3a and 4a, because figure 5a is shown from above the vehicles, only the horizontal positions of the lighting zones and only the left and right borders of the initial shadow tunnel 501 are made visible. However, when the projected beam 500 is pixelated, the initial shadow tunnel 501 may further comprise an upper border and a lower border. The same applies to the target shadow tunnel 511 described hereafter.

The initial shadow tunnel 501 encompasses the position of the other vehicle 503, so as to avoid glaring the driver of this other vehicle 503.

The initial shadow tunnel 501 can be projected until the start of a time period of index k, at instant t+k*T1.

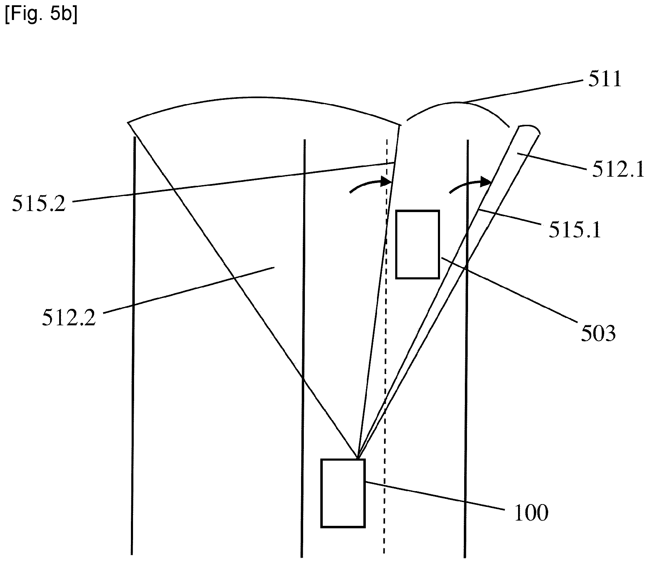

Figure 5b shows a target pixelated or segmented beam 510 projected by headlamps of a vehicle according to some embodiments of the invention, in the third driving situation.

At instant t+(k+1)*T1, new information is captured by the at least one sensor 103.1 to 103.N, indicating that the relative position of the other vehicle 503 has changed, as the other vehicle 503 has moved to the right lane. This requires updating the initial beam 500 into the target beam 510, in which the initial shadow tunnel 501 is updated (moved to the right) into the target shadow tunnel 511 as shown on figure 5b.

The target shadow tunnel 511 is positioned between a target right lighting zone 512.1 and a target left lighting zone 512.2. The target right lighting zone 512.1 and the target left lighting zone 512.2 are moved to the right, so as to displace the target shadow tunnel 511 to the right compared to the initial shadow tunnel 501: to this end, a target left border position 515.2 and a target right border position 515.1 are calculated by the GFHB function and the lighting module 110 is controlled to project the target beam 510, in accordance with the method described with reference to figure 6.

Of course, the invention can be applied in many other situations, which require different updates of the shadow tunnel controlled by the GFHB function. Also, in other situations, the light beam controlled by the GFHB function may comprise two or more shadow tunnels at different tunnel positions.

Figure 6 is a flowchart showing the steps of a method according to some embodiments of the invention.

The method for controlling a lighting module may be implemented by a control module of the vehicle in charge of performing the GFHB function, which can be the body controller 101 or the driver 201, that have been previously described.

At a step 600, the control module controls the lighting module to project an initial light beam, comprising at least one shadow tunnel positioned at an initial tunnel position, in accordance with the GFHB function. In what follows, it is considered that the initial light beam comprises a single shadow tunnel positioned at the initial tunnel position, for simplification purpose. The initial light beam may have been obtained by controlling the lighting module according to a previous iteration of steps 601 to 607. Therefore the initial light beam is a current light beam at the beginning of a first time period T1 of index k, comprised between instants t+k*T1 and t+(k+1)*T1. Therefore, the initial light beam is the light beam projected after implementing steps 601 to 607 during the previous period T1 of index k-1, comprised between the instants t+(k-1)*T1 and t+k*T1.

Therefore, "initial" indicates the state of the light beam at the beginning of a first time period T1 of index k=1, the index k being incremented at each first time period T1.

Indeed, as previously explained, the GFHB function requires a dynamic update of the light beam that is projected by the lighting module. The initial tunnel position defines at least an initial border position for each border of the shadow tunnel. For the sake of simplification, we consider hereafter that the initial tunnel position defines at least an initial right border position and an initial left border position. In addition, as explained above, the initial tunnel position may further define an initial upper border position and an initial lower border position.

At a step 601, the control module may receive information from another module, the information being representative of the position of one or several other vehicles located ahead of the vehicle 100. The information received may be:
- the raw information from the at least one sensor 103.1-103.N, in some of the embodiments in which the control module comprises the target tunnel determination module 102;
- the information from the analysis module identifying the position for every other vehicle in the scene in front of the vehicle 100. In that embodiment, the control module may comprise the target tunnel determination module 102, which is arranged to determine the tunnel position for each shadow tunnel, based on the information from the analysis module;
- the tunnel position for each shadow tunnel, received from the target tunnel determination module 102.

At a step 602, the control module obtains, for each border of the initial shadow tunnel being in a first border position, a target border position of the border. The target border position may be determined by the target tunnel determination module 102. The target border position may be identical or different from the first border position. The control module may therefore obtain a target right border position and a target left border position.

The following steps of the method explain how the lighting module is controlled by the control module to move each border of the shadow tunnel from the initial border position to the target border position.

At a step 603, the control module determines, for each border of the shadow tunnel, an update direction, the update direction being the direction of a vector going from the initial border position to the target border position. For example, the control module determines a first update direction for the right border and a second update direction for the left border. The update direction may be:
- a tunnel reducing direction if the update direction is directed to the interior of the shadow tunnel. For example, for the right border, this corresponds to a situation in which the target right border position is located to the left of the initial right border position. For the left border, this corresponds to a situation in which the target left border position is located to the right of the initial left border position;
- a tunnel opening direction if the update direction is directed to the exterior of the shadow tunnel. For example, for the right border, this corresponds to a situation in which the target right border position is located to the right of the initial right border position. For the left border, this corresponds to a situation in which the target left border position is located to the left of the initial left border position.

At step 604, the control module determines, for each border of the shadow tunnel (and for each shadow tunnel if there are several shadow tunnels in the initial light beam), if the update direction is a tunnel reducing direction or a tunnel opening direction. If the update direction is a tunnel reducing reduction for a given border, the method goes to step 606 for this given border. Else, the method goes to step 605 for this given border.

The next steps describe how the control module updates the projected beam to move one or several of the borders, until the target border positions of all the borders are reached.

At step 605, the update direction of a given border is therefore a tunnel opening direction. In that case, the control module controls the lighting module at step 605 to move the given border from the initial border position to the target border position, without any intermediate border position. This update of step 605 can be performed during a single second period T2 within the first time period of index k comprised between t+k*T1 and t+(k+1)*T1 for example.

The second period T2 is smaller than or equal to the first period T1 and corresponds to the granularity of the light beam update, as it is explained when referring the steps 606 and 607. Therefore, during a first period T1, there is a single period T2 or there are a plurality of consecutive second periods T2.

At step 605, the target border position is reached in one single second period T2, without any intermediate border position.

At step 606, the update direction of a given border is therefore a tunnel closing direction. In that case, the control module controls the lighting module at step 606 to move the given border from its current border position (which is the initial border position at the first iteration of step 606) to an intermediate border position, towards the target border position, the intermediate border position being determined by the second time period T2 (the duration of T2) and by a current border speed that depends on a distance between the current border position and the target border position.

The update speed value may be an angular speed value that sets the angular distance between the current border position and the intermediate position based on the duration of the second time period T2.

For example, a predefined increasing function sets correspondences between update speed values and distance values and the current border speed is determined by applying the predefined increasing function to the distance.

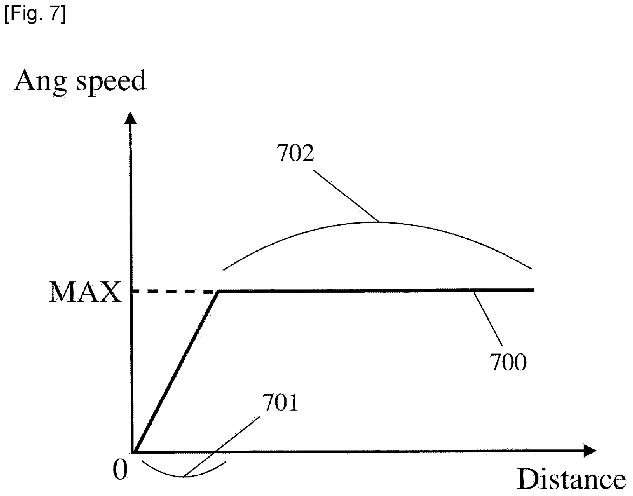

Figure 7 shows an example of a predefined increasing function 700 based on which the current border speed used for determining the intermediate border, is determined, according to some embodiments of the invention.

In the embodiments illustrated on figure 7, the predefined increasing function is linear in a first predefined range 701 of possible distances between the current border position and the target border position that are comprised between zero and a predefined distance value, and is a constant in a second predefined range 702 of distances above the predefined distance value.

The distance value represents the value of the distance between the current border position and the target position, which may be an angular distance. Therefore, based on this distance, a border angular speed can be determined by the control module to calculate the intermediate border position.

The use of the predefined increasing function 700 provides the following advantages.

The constant value in the second predefined range 702 enables to set a maximum angular speed of the border, in accordance with the MBMS feature previously described.

The increasing part of the function 700, in the first predefined range 701, enables to decelerate the border speed when it is getting near from the target border position. Indeed, the closer the current border position is from the target border position, the slower the border is moved to the target border position. This is advantageous:
- when the initial border position is remote from the target border position, the border is moved fast (but below the maximum value) at the beginning of the first time period T1, and then in a slower manner when the current border position is near from the target border position gets near from the target border position. This deceleration enables to avoid disturbing the user of the vehicle 100 compared with the prior art solution, in which the border is abruptly stopped (from the maximum angular border speed to zero) when it reaches the target border position;
- when the initial border position is near from the target border position, the border is moved slowly, thereby avoiding a flickering effect. The increasing part of the first predefined range 701 therefore enables to filter high frequency changes in the border position, which may be due to noise in the information captured by the one or several sensors 103.1-103.N.

The increasing part in the first predefined range 701 illustrated on figure 7 is linear. Alternatively, the increasing part may be a polynomial or any other increasing function.

After step 606, the control module determines, at step 607, if the intermediate border position is the target border position or if time period T1 is expired. If so, the update of the border is completed or the period T1 of index k is expired and the method goes back to step 600, to repeat the steps of the method for a next first period T1 of index k+1. The intermediate border position at the end of the first period T1 of index k (which can be the target border position if reached) becomes the initial border position of the first period T1 of index k+1.

Else, if the intermediate border position is not the target border position and if T1 is not expired (in the embodiments where T1 is greater than T2), step 606 is repeated for a next second time period T2, in which the intermediate border position becomes the current border position.

Step 606 may be repeated several times, for several consecutive second time periods T2, until the target border position is reached or until the period T1 of index k expires.

The distance between consecutive intermediate positions is decreasing as the border is getting nearer from the target border position.

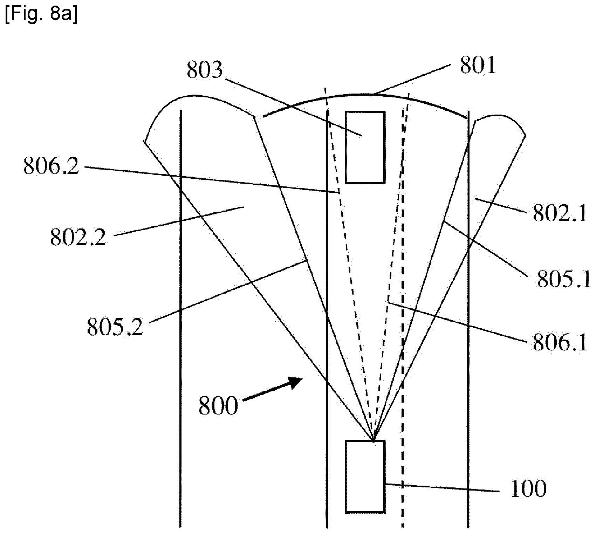

Figures 8a to 8d shows the control of the border of a shadow tunnel in the projected beam, in an embodiment with several consecutive second time periods T2 within the same first period T1, according to some embodiments of the invention, in the second driving situation.

The second driving situation corresponds to the driving situation illustrated on figures 4a and 4b, in which the distance between the vehicle 100 and another vehicle is increasing.

On figures 8a to 8b, the other vehicle is referenced 803 and is in the position shown on figure 4b. The projected beam 800 is therefore to be updated by the control module to adapt it to the new position of the other vehicle 803.

Figure 8a shows a projected beam 800 with an initial shadow tunnel 801 in an initial position, defined by an initial right border position 805.1 and by an initial left border position 805.2. The initial shadow tunnel 801 is comprised between an initial right lighting zone 802.1 and an initial left lighting zone 802.2.

A target right border position 806.1 and a target left border position 806.2 are obtained by the control module at step 602 as previously described.

As shown on the figure 8a, in this situation, the update directions for both the right border and the left border of the initial shadow tunnel 801 are tunnel closing directions. Therefore, steps 606 and 607 are carried out by the control module for both the right and left borders of the initial shadow tunnel 801.

It is to be noted that in other situations, only one of the borders of the initial shadow tunnel has an update direction that is a tunnel closing direction.

In some other situations, all the borders of the initial shadow tunnel have update directions that are tunnel opening directions.

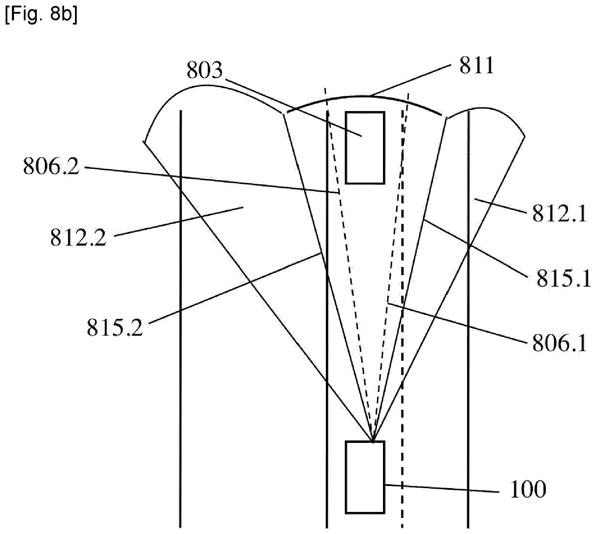

Figure 8b shows a first intermediate projected beam 811, during a second period T2 of index 1 during a first period T1 (of index k for example), after a first iteration of step 606 is carried out by the control module.

As explained above, the control module determines a first intermediate right border position 815.1 and a first intermediate left border position 815.2 and controls the lighting module accordingly. Therefore, a first intermediate shadow tunnel 811 is obtained, comprised between a first intermediate right lighting zone 812.1 and a first intermediate left lighting zone 812.2. The first intermediate right lighting zone 812.1 and the first intermediate left lighting zone 812.2 are larger than the initial lighting zones 802.1 and 802.2 because the shadow tunnel is closing towards the target tunnel position.

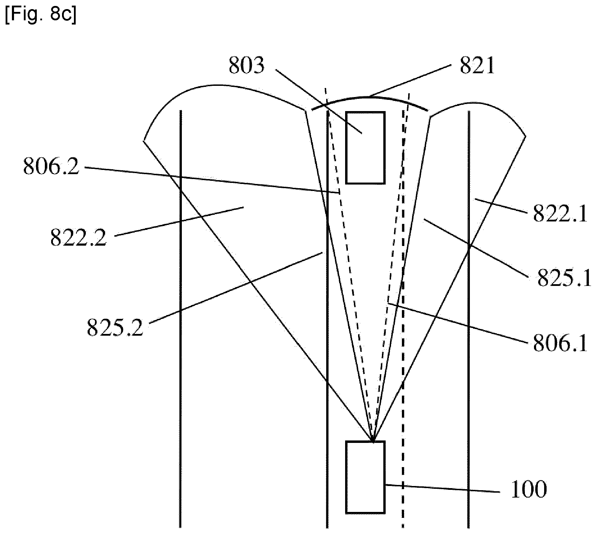

Because the first intermediate right border position 815.1 and the first intermediate left border position 815.2 are different from the target right border position 806.1 and the target left border position 806.2, step 606 is repeated for a next period of index k=2, as described on figure 8c.

Figure 8c shows a second intermediate projected beam 821, during a second period T2 of index k=2, within the same first period T1, after a second iteration of step 606 is carried out by the control module.

As explained above, the control module determines a second intermediate right border position 825.1 and a first intermediate left border position 825.2 and controls the lighting module accordingly. Therefore, a first intermediate shadow tunnel 821 is obtained, comprised between a first intermediate right lighting zone 822.1 and a first intermediate left lighting zone 822.2. The second intermediate right lighting zone 822.1 and the second intermediate left lighting zone 822.2 are larger than the first intermediate lighting zones 812.1 and 812.2 because the shadow tunnel is closing towards the target tunnel position. However, the closing angular speed of the second period T2 at index k=2 is reduced compared to the second period T2 of index k=1, illustrated on figure 8b thereby providing a smooth beam transition to the driver.

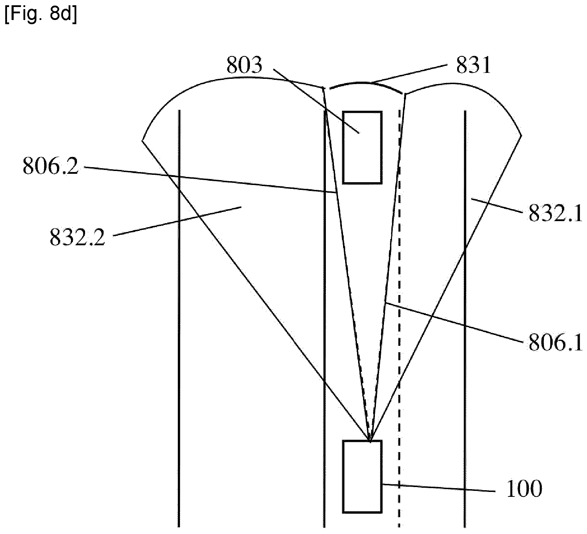

Because the second intermediate right border position 825.1 and the second intermediate left border position 825.2 are different from the target right border position 806.1 and the target left border position 806.2, step 606 is repeated again for a next second time period of index 3, as described on figure 8d.

Figure 8d shows a third intermediate projected beam 831, during a third period T2 of index k=3, within the same first period T1, after a third iteration of step 606 is carried out by the control module.

As explained above, the control module determines a third intermediate right border position and a third intermediate left border position and controls the lighting module accordingly: in this example, the third intermediate right and left border positions are the target right and left border positions 806.1 and 806.2. Therefore, a target shadow tunnel 831 is obtained, comprised between a target intermediate right lighting zone 832.1 and a target intermediate left lighting zone 832.2. The target right lighting zone 832.1 and the target left lighting zone 832.2 are larger than the second intermediate lighting zones 822.1 and 822.2 because the shadow tunnel is closing. However, the closing angular speed of the third period T2 of index k=3 is reduced compared to the second period T2 of index k=2, illustrated on figure 8c thereby providing a smooth beam transition to the driver.

Because the third intermediate right border position and the third intermediate left border position are equal to the target right border position 806.1 and the target left border position 806.2, step 606 is not repeated again, and the method goes back to step 600, until a new first period T1 (of index k+1) begins.

Alternatively to the above description of figures 8a to 8d above, T1 may be equal to T2According to this alternative, steps 606 and 607 is performed only once for each first period T1. In this embodiment, the target border position may be updated at the end of every time period T1, and there is only one intermediate border position that is determined at step 606 for every time period T1.

According to this alternative, and in a specific situation in which the target border positions 806.1 and 806.2 remain the same during three consecutive periods T1, of index k, k+1 and k+2, the first intermediate beam 811 corresponds to the beam at the end of the first period T1 of index k, the second intermediate beam 821 corresponds to the beam at the end of the first period T1 of index k+1 and the third intermediate beam 831 corresponds to the beam at the end of the first period of index k+2.

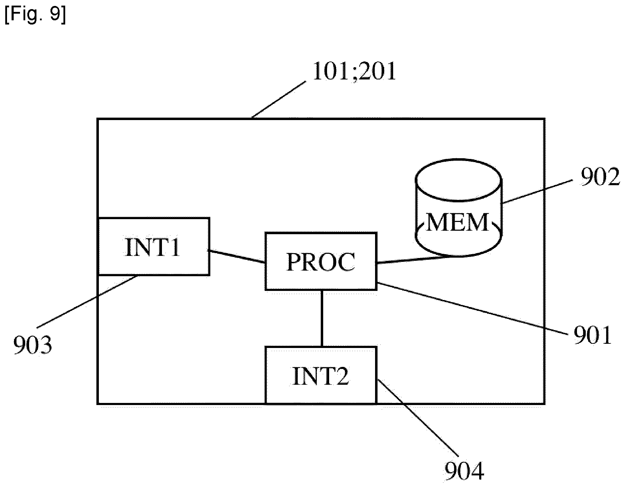

Figure 9 shows the structure of a control module according to some embodiments of the invention.

As explained above, the control module can be, or may be part of, the driver 201 or the body controller 101.

The control module 101;201 comprises a processor 901 and a memory 902.

The processor 901 may comprise one or multiple microprocessors, a Central Processing Unit (CPU), on a single Integrated Circuit (IC) or several IC chips.

No restriction is attached to the memory 902, which may be any non-transient, tangible form of memory. For example, it can comprise ROM, RAM, EEPROM and/or flash memory. The processor 901 may be programmable and may be configured to execute instructions that are stored in its internal memory or to execute instructions that are stored in the memory 902.

The memory 902 can store instructions for implementing the steps 600 to 607 described above.

The control module 101; 201 further comprises a first interface 903 configured to receive the information being representative of the position of one or several other vehicles located ahead of the vehicle 100, described above referring to step 601.

The control module 101; 201 further comprises a second interface 904 configured to communicate :
- with the right lighting module 110.1 and the left lighting module 110.2, when the control module is implemented in the body controller 101;
- with the light source 210 when the control module is implemented in the driver 201 of each of the right lighting module 110.1 and the left lighting module 110.2.

The example embodiments are described in sufficient detail to enable those of ordinary skill in the art to embody and implement the systems and processes herein described. It is important to understand that embodiments can be provided in many alternate forms and should not be construed as limited to the examples set forth herein.

Accordingly, while embodiment can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included.

## Claims

1. A method of controlling a lighting module (110; 110.1; 110.2) mounted in a vehicle (100), the lighting module comprising a light source (202) with a plurality of light elements (210) that are separately controllable to project a pixelated or segmented beam (300; 310; 400; 410; 500; 510; 800) in front of the vehicle, the vehicle comprising a control module (101; 201) performing a glare free high beam function that is arranged to control the light source to create at least one shadow tunnel (811; 821; 831) in the pixelated or segmented beam based on a position of at least one other vehicle detected in front of the vehicle, wherein the method comprises, for each border of a shadow tunnel positioned at an initial border position (805.1; 805.2):
- obtaining (602) a target border position (806.1; 806.2) for the border of the shadow tunnel;
- controlling (605-607) the light source (202) to move the border from the initial border position (805.1; 805.2) to the target border position (806.1; 806.2); wherein, when an update direction going from the initial border position to the target border position is a tunnel reducing direction, controlling the light source (202) to move the border from the initial border position (805.1; 805.2) to the target border position (806.1; 806.2) the light source (202) comprises:
- moving (606) the border from a current border position to an intermediate border position (815.1; 815.2; 825.1; 825.2), towards the target border position, the intermediate border position being determined based on a current time period and based on a current border speed that depends on a distance between the current border position and the target border position;
- when the intermediate border position differs from the target border position, repeating (607) the previous step, at a next time period, the intermediate border position becoming the current border position.

2. The method according to claim 1, wherein a predefined increasing function (700) sets correspondences between speed values and possible distances between the current border position and the target border position, wherein the current border speed is determined by applying the predefined increasing function to the distance.

3. The method according to claim 2, wherein the predefined increasing function is linear in a first predefined range (701) of possible distances between the current border position and the target border position that are comprised between zero and a predefined distance value.

4. The method according to claim 2, wherein the predefined increasing function is a polynomial function in a first predefined range (701) of possible distance values between the current border position and the target border position that are comprised between zero and a predefined distance value.

5. The method according to claim 3 or 4, wherein the predefined increasing function is a constant in a second predefined range (702) of possible distances between the current border position and the target border position that are above the predefined distance value.

6. The method according to one of the preceding claims, wherein if the update direction is a tunnel opening direction, the control module (101; 201) controls (605) the light source to move the border from the initial border position directly to the target border position without any intermediate border position.

7. The method according to one of the preceding claims, wherein the steps of obtaining (602) the target border position for the border of the shadow tunnel and of controlling (605-607) the light source (202) to move the border from the initial border position (805.1; 805.2) to the target border position (806.1; 806.2), are carried out during a first time period T1 of index k, and are repeated for a next first time period T1 of index k+1;
wherein the current time period based on which the intermediate border position (815.1; 815.2; 825.1; 825.2) is determined, is a second time period T2, the second time period T2 being shorter than or equal to the first time period T1.

8. The method according to claim 7, wherein the second time period T2 is more than N times shorter than the first time period T1, N being an integer greater than or equal to 2.

9. A computer program comprising instructions arranged for implementing the method according to one of claims 1 to 8, when said instructions are executed by a processor (901).

10. A control module (101; 201) arranged for controlling at least one lighting module (110.1; 110.2; 110) of a vehicle (100), the lighting module comprising a light source (202) with a plurality of light elements (210) that are separately controllable to project a pixelated or segmented beam in front of the vehicle, the control module being configured for performing a glare free high beam function to create at least one shadow tunnel (811; 821; 831) in the pixelated or segmented beam based on a position of at least one other vehicle detected in front of the vehicle, wherein the control module comprises a processor (901) configured for, for each border of a shadow tunnel positioned at an initial border position (805.1; 805.2):
- obtaining a target border position (806.1; 806.2) for the border of the shadow tunnel;
- controlling the light source to move the border from the initial border position to the target border position;
wherein, when an update direction going from the initial border position to the target border position is a tunnel reducing direction, controlling the light source to move the border from the initial border position to the target border position the light source comprises:
- moving the border from a current border position to an intermediate border position (815.1; 815.2; 825.1; 825.2), towards the target border position, the intermediate border position being determined based on a current time period and based on a current border speed that depends on a distance between the current border position and the target border position;
- when the intermediate border position differs from the target border position, repeating the previous step, at a next time period, the intermediate border position becoming the current border position.

11. A system comprising a control module according to claim 10 and a lighting module (110.1; 110.2; 110), the lighting module comprising a light source (202) with a plurality of light elements (210) that are separately controllable to project a pixelated or segmented beam.

12. The system according to claim 11, wherein the lighting module (110.1; 110.2; 110) comprises a pixelated electroluminescent light source, wherein the plurality of light elements (210) are mounted on a common substrate, the lighting module (202) being configured to project a pixelated beam.

13. The system according to claim 11, wherein the lighting module comprises a matrix light module (110.1; 110.2; 110), wherein the plurality of light elements (210) are mounted on respective substrates, the lighting module being configured to project a segmented beam.

14. A vehicle (100) comprising a pair of lighting modules (110; 110.1; 110.2), and at least one control module (101; 201) according to claim 10.
